# EUROPÄISCHE PATENTSCHRIFT

(11) **EP 0 600 826 B1**
(45) Veröffentlichungstag und Bekanntmachung des Hinweises auf die Patenterteilung: **14.02.1996**
(21) Anmeldenummer: 93810750.5
(22) Anmeldetag: 26.10.1993
(51) Int. Cl.: A47J 43/12, A47J 31/46

(54) **Vorrichtung zur Erzeugung von Milchschaum für Cappuccino-Kaffee oder ähnlichen Getränken**
Device for producing frothed milk for cappuccino-coffee or similar beverages
Dispositif pour produire du lait moussé pour du café cappuccino ou boissons similaires

(30) Priorität: 12.11.1992 CH 3305/92; 08.07.1993 CH 2053/93
(43) Veröffentlichungstag der Anmeldung: 08.06.1994
(73) Patentinhaber: THERMOPLAN AG, CH-6353 Weggis (CH)
(72) Erfinder: Fricker, Robert, CH-6403 Küssnacht am Rigi (CH)
(74) Vertreter: Luchs, Willi

(56) Entgegenhaltungen:
- EP-A- 0 157 069
- DE-A- 2 538 229
- DE-A- 4 213 895
- DE-C- 3 521 982

## Beschreibung

Die Erfindung betrifft eine Vorrichtung zur Erzeugung von Milchschaum für Cappuccino-Kaffee oder ähnlichen Getränken, mit einem die Milch oder dergleichen aufnehmenden Behälter, von welchem aus die Milch mittels einer Pumpe über eine Leitung in eine mit einer Austrittsöffnung versehene Kammer geleitet, ist wobei die Milch erhitzt und ihr Luft für die Erzeugung des Milchschaumes beigemischt ist.

Bei einer solchen gattungsgemässen Vorrichtung zum Emulgieren einer Mischung von Luft, Dampf und Milch zum Zubereiten von Cappuccino und ähnlichen Getränken gemäss der EP-A2 0 195 750 wird wie beim gesamten Stand der Technik dieses Emulgieren oder Schaumerzeugen unter Ausnützung des Venturi-Prinzipes bewerkstelligt. Dazu ist eine Dampfzufuhrleitung mit einer Düse, die in eine Ansaugkammer führt, sowie jeweils eine mit letzteren in Verbindung stehenden Luft- und Milcheinlassleitung vorgesehen. Das emulgierte Gemisch wird dann von der Ansaugkammer tangential in eine weitere ringförmige Kammer geleitet, welche einen zentral nach unten führenden Auslass aufweist, unter diesen zum Beispiel eine Tasse gestellt ist. Diese zusätzliche Kammer bewirkt, dass sich der Schaum von der Restflüssigkeit trennt und somit der beispielsweise beim Cappuccino-Kaffee angestrebte Schaum in genügender Menge in eine Tasse geleert wird, der darin oben aufschwimmt. Nachteile bei dieser Vorrichtung bestehen darin, als sie von einer Dampferzeugung abhängig ist und sie sich wirklich nur für das Emulgieren eignet und sonnt deren Gebrauch ziemlich beschränkt ist.

Bei der Vorrichtung gemäss dem Dokument EP-A-0 157 069 wird der Milchschaum vom Prinzip her in all den erläuterten Ausführungsbeispielen auf folgende Weise erzeugt: Die Milch wird in einem Durchlauferhitzer erwärmt oder in erhitztem Zustand in den Behälter geleert. Mittels einer Pumpe, die dem Durchlauferhitzer vorgeschaltet ist wird sie dann durch eine Düse ausgelassen und ihr danach unter Ausnützung des Venturi-Effektes die Luft beigemischt. Die Milch muss dabei mit einer bestimmten Geschwindigkeit aus dieser Düse austreten, damit die Luft in ihr wirksam aufgenommen wird.

Ein erheblicher Nachteil bei dieser bekannten Vorrichtung besteht jedoch darin, dass die heisse Milch dazu neigt, sich an den mit ihr in Kontakt stehenden Wandungen dieser Düse festzukleben und dass dadurch diese Düse sehr schnell verstopft. Auch die ringförmige Öffnung um die Düse, durch welche die Luft von der strömenden Milch angesaugt wird, kann sich ebenso verstopfen, insbesondere dann, wenn die Milchzufuhr unterbrochen ist und sich an der Düse Resttropfen von heisser Milch ansetzen. Sobald aber diese ringförmige Öffnung auch nur teilweise verstopft ist, erfolgt eine ungenügende Schaumbildung. Es hat sich bei dieser Vorrichtung darüberhinaus herausgestellt, dass auch die Milch bei voller Luftzufuhr nicht ausreichend Luft aufnehmen kann und dass sich infolgedessen kein einwandfreier Schaum bildet.

Der vorliegenden Erfindung liegt daher die Aufgabe zugrunde, eine Vorrichtung der eingangs beschriebenen Gattung derart auszubilden, dass mit ihr die obgenannten Nachteile behoben werden, dass unabhängig von Dampf ein einwandfreier Schaum erzeugt werden kann und mit ihr überdies ein universellerer Gebrauch möglich ist.

Die Aufgabe ist erfindungsgemäss dadurch gelöst, dass die Milch vor dem Eintritt in die Pumpe (55) oder vor dem Eintritt in ein Widerstandsdurchlasselement (20) zum einen erhitzt und ihr zum andern die Luft über eine in die Leitung (37) führende Luftzufuhrleitung (54) beigemischt ist, und dass die Milch von der Pumpe (55) unter Druck unmittelbar oder durch das Widerstandsdurchlasselement (20) unter Bildung des Milchschaums in die Kammer (23) mit der Austrittsöffnung (25) geleitet ist.

Bei der vorzugsweisen Verwendung eines Widerstandsdurchlasselementes wird mit dieser erfindungsgemässen Vorrichtung gegenüber der bekannten eine noch zuverlässigere und noch vorzüglichere Schaumentwicklung erzielt. Zudem benötigt man mit ihr nur einen elektrischen Anschluss zum einen für den Antrieb der Pumpe und zum andern für die Erhitzung der Milch, nicht aber einen Dampfanchluss, der nicht so ohne weiteres vorhanden ist. Damit lassen sich nicht nur äusserst bekömmliche Cappuccino's sondern eben auch erhitzte Milch mit Schaum beispielsweise für Schockoladegetränke oder ähnlichem einfach und schnell erzeuge. Zudem hat die Vorrichtung nach der Erfindung den Vorteil, als die Milch sowie der Schaum hundertprozentig rein aus ihr austreten, während bei der bekannten Vorrichtung durch den Dampf hervorgerufene Wasseranteile in dem Schaum/Milch-Gemisch unvermeidbar sind.

Bei einer Ausführung der Erfindung wird die erhitzte Milch zusammen mit der Luft von der Pumpe direkt in die Kammer geleitet. Auch dies ergibt einen ausreichenden Milchschaum für die obgenannten Anwendungen.

Vorteilhafte Weiterbildungen der Erfindung sind durch die Unteransprüche gekennzeichnet.

Ein Ausführungsbeispiel sowie weitere Vorteile der Erfindung sind anhand der Zeichnung näher erläutert. Es zeigt:
Fig. 1 einen Längsschnitt durch eine erfindungsgemässe Vorrichtung und
Fig.2 eine Ansicht des Innern eines kompletten Gerätes mit einer Vorrichtung nach Fig.1.

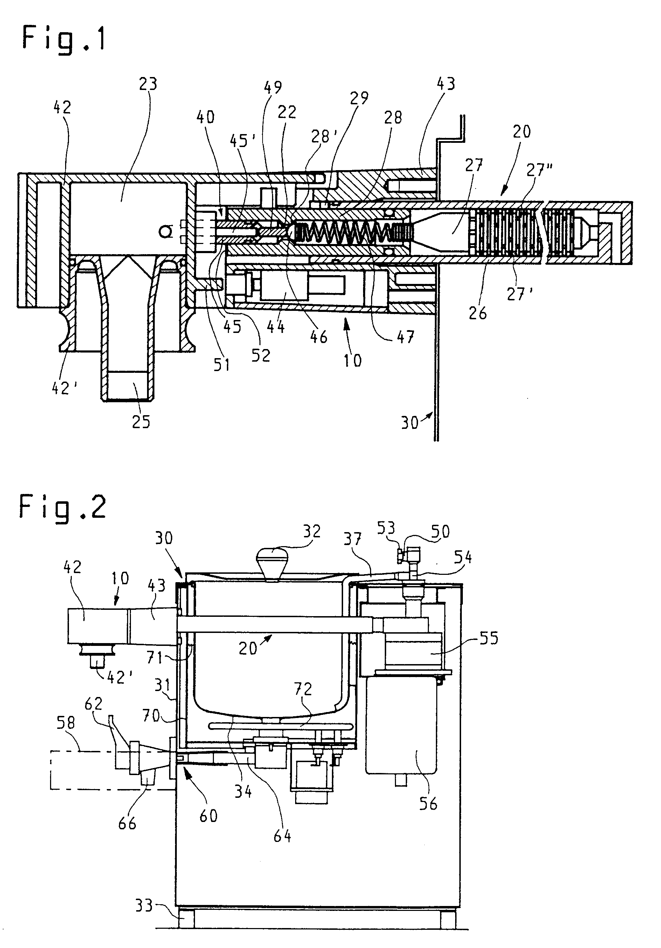

Fig.1 zeigt eine erfindungsgemässe Vorrichtung 10, die im wesentlichen aus einem Widerstandsdurchlasselement 20 mit einer Öffnung 22, einer zu diesem auslasseitig angeordneter, eine Austrittsöffnung 25 aufweisende Kammer 23 zum Trennen des Schaumes von der unverschäumbaren Milch und einlasseitig aus einer Milch-, einer in diese führende Luftzufuhrleitung und aus einer die Milch unter Druck zuführenden Pumpe besteht. Diese Vorrichtung 10 ist dabei in einem nur andeutungsweise gezeigten Gerät 30 untergebracht, welches nachfolgend zusammen mit der einlasseitigen Anordnung der Vorrichtung 10 im Detail beschrieben ist.

Das Widerstandsdurchlasselement 20 setzt sich aus einem Zylinder 26 und einem darin annähernd spielfrei fixierten stabförmigen Element 27 zusammen, wobei letzteres vorzugsweise aus einem speziellen Kunststoffmaterial besteht und an seinem Umfang ein lamellenartiger Aufbau 27'' vorgesehen ist, der einen Labyrinthdurchlass 27' bildet, durch welchen die Milch gepresst wird. Solche Widerstandsdurchlasselemente sind an sich bekannt und wurden bis anhin ausschliesslich zur Erzeugung von Rahm benutzt. Zur erfolgreichen Erzeugung von Milchschaum oder ähnlichem sind an dieses Widerstandsdurchlasselement 20 gewisse Bedingungen geknüpft, so muss beispielsweise dieser Labyrinthdurchlass 27' eine Mindestlänge aufweisen und für eine optimale und gezielte Milchmengenleistung sind die Querschnittsgrösse und Ausbildung des lamellenartigen Aufbaus 27'' entsprechend zu dimensionieren.

Eine zum Widerstandsdurchlasselement 20 auslasseitig integrierte Schalteinrichtung 40 ermöglicht ein dosiertes Auslassen von Milchschaum. Diese mittels Handbetätigung bedienbare Schalteinrichtung 40 umfasst einen die Kammer 23 sowie die Austrittsöffnung 25 verkörpernder Schaltkopf 42, ein Verbindungselement 28, ein am Gerät 30 befestigbaren Gehäuseteil 43 sowie einen in diesem montierten Mikroschalter 44, wobei mit letzterem die Pumpe ein- oder ausgeschaltet wird. Der Schaltkopf 42 ist dabei über ein an ihm angebrachten Steckdorn 45 in das mittels eines Bajonettverschlusses 29 oder dergleichen im Widerstandsdurchlasselement 20 gehaltenen Verbindungselement 28 gesteckt und darin verschiebbar positioniert. Dem Verbindungselement 28 ist zudem ein die Öffnung 22 schliessendes Ventil 46, 47 zugeordnet, das aus einem kugelförmigen Schliesselement 46 und aus einer dieses in eine Verjüngung der Öffnung 22 pressende Druckfeder 47 besteht, wobei letztere an dem stabförmigen Element 27 abgestützt und gehalten ist. Der Steckdorn 45 weist zudem eine Spitze 49 auf, welche in die Öffnung 22 ragt und dort in Kontakt mit dem Schliesselement 46 des Ventiles steht. Die Öffnung 22, 45' ihrerseits erstreckt sich durch das Verbindungselement 28 und durch diesen Steckdorn 45 und mündet annähernd tangential in die ringförmige Kammer 23. Der Schaltkopf 42 hat ferner ein sich parallel zum Steckdorn 45 erstreckender und koaxial zum Mikroschalter 44 angeordneter Kontaktstift 51 und überdies ein die Austrittsöffnung 25 bildendes abnehmbares Steckteil 42'.

Wenn nun Milchschaum für einen Cappuccino aus dieser Vorrichtung 10 herausgelassen werden soll, so wird der Schaltkopf 42 von Hand bis zu einem vom Gehäuseteil 43 gebildeten Anschlag 52 gegen das Gerät 30 hin geschoben und dort solange in Position gehalten, bis die gewünschte Menge Schaum beispielsweise in eine unter die Austrittsöffnung 25 gestellte Tasse eingefüllt ist. Sobald mit dem Handdruck auf den Schaltkopf 42 losgelassen wird, wird der Schaumausfluss gestoppt. Beim Verstellen des Schaltkopfes 42 bis zum Anschlag 52 drückt einerseits die Spitze 49 des Steckdornes 45 gegen das Schliesselement 46 und öffnet damit das Ventil 46, 47 und gleichzeitig betätigt sein Kontaktstift 51 den Mikroschalter zum Einschalten der Pumpe. Dadurch wird erhitzte Milch durch das Widerstandsdurchlasselement 20 gepresst, die zum Teil in Schaum emulgiert durch die Öffnung 22 in die Kammer 23 fliesst und dort zuerst vorwiegend der Schaum abfliesst, während sich die unverschäumte schwerere Milch aufgrund der Zentrifugalkraft rotierend an die Kammerwandung gedrückt wird und sich vom Schaum trennt und auch länger in der Kammer 23 verweilt. Mit dieser Verfahrensweise kann damit gegenüber dem Venturi-Prinzip ein noch bekömmlicherer Schaum erzeugt werden.

Das Widerstandsdurchlasselement 20 kann beispielsweise zwecks Reinigung sehr schnell demontiert werden, indem vorerst der Schaltkopf 42, dann das Verbindungselement 28 durch Lösen seines Bajonettverschlusses 29 und nachfolgend das stabförmige Element 27 aus dem Zylinder 26 weggenommen werden kann.

Diese oben näher umschriebene Schalteinrichtung 40 könnte selbstverständlich konstruktiv auch anders aussehen. So könnte beispielsweise ein zeitlich geregelter Schalter vorgesehen sein, mit dem nach kurzem Knopfdruck eine bestimmte Schaummenge ausfliessen würde.

Das komplette Gerät 30 nach der Fig.2 hat ein Blechgehäuse 31, einen Deckel 32 sowie Stützbeine 33. In dieses ist ein herausnehmbarer Behälter 34 mit dem Deckel 32 gestellt, in dem die Milch auf bekannte Weise aufgeheizt wird. Im weiteren ist darin eine vom Inneren dieses Behälters 34 ausgehende Leitung 37 und eine in diese führende Luftzufuhrleitung 54 vorgesehen, wobei letztere von einem oberhalb dieses Gerätes 30 angeordneter, mittels eines Drehknopfes 53 einstellbaren Luftmengenreglers 50 ausgeht. Diese Luftzufuhr in die erhitzte Milch ermöglicht überhaupt die Schaumerzeugung. Im Prinzip könnte auch ein Gas anstelle von Luft verwendet werden. Die Leitung 37 führt dann in eine im Gerät 30 angeordnete, einen Antrieb 56 aufweisende Pumpe 55, von der aus dann die Milch in das Widerstandsdurchlasselement 20 gepumpt wird. Die erfindungsgemässe Vorrichtung 10 ist an die Frontseite des Gerätes 30 geschraubt oder anderweitig lösbar befestigt. Sichtbar sind davon der Gehäuseteil 43, der Schaltkopf 42 sowie das Steckteil 42' mit der Austrittsöffnung 25.

Zudem ist in diesem Gerät 30 ein den Milchbehälter 34 umschliessendes zusätzliches Heizgefäss 70 vorgesehen, welches vorzugsweise Wasser 71 enthält. Letzteres wird von einer in dem Heizgefäss 70 integrierten regelbaren Heizeinrichtung 72 auf eine bestimmte Temparatur aufgewärmt, das seinerseits die Milch im Behälter 34 erhitzt.

Ferner sind dem Gerät 30 ein unter der Austrittsöffnung 25 angeordneter Tassenhalter 58 und ein neben diesem befindlichen Milchauslasshahnen 60 zugeordnet. Mit letzterem kann separat heisse Milch aus dem Behälter 34 ausgelassen werden, und er besteht im wesentlichen aus einer von diesem Behälter 34 ausgehenden Auslassleitung 64 und einem an sich bekannten handbetätigbaren Hahnen 62 mit einem Ausgang 66.

Auch zu diesem Gerät 30 ist eine bestimmte Ausführungsanordnung gezeigt, die genauso anders aussehen könnte. Die vorliegende Erfindung ist damit aber ausreichend geoffenbart und es sind daher keine weiteren Ausführungsvarianten mehr dargetan.

In der oben ausführlich beschriebenen Variante ist diese erfindungsgemässe Vorrichtung 10 und überdies der Milchauslasshahnen 60 in dem Gerät 30 integriert. Dieses Gerät 30 wird so verkauft und eignet sich vorzüglich für den Gastronomiebereich oder auch als Haushaltgerät. Die Vorrichtung könnte aber genausogut in einer Kaffeemaschine oder in einem Gerät mit mehreren Funktionen eingebaut sein.

Die erhitzte Milch sowie das Luftgemisch von der Pumpe 55 kann auch als Ausführungsvariante unmittelbar, d.h. ohne Zwischenschaltung eines Widerstandsdurchlasselementes in die Kammer 23 geleitet werden. In diesem Falle wäre anstelle des Widerstandsdurchlasselementes 20 eine Leitung vorgesehen, die von der Pumpe 55 bis zur Öffnung 22 führen würde. Wiederum könnte dann mittels dem Ventil und dem Schaltkopf dosiert Milchschaum aus der Vorrichtung herausgelassen werden.

Die Kammer 23 ist in dem gezeigten Beispiel zylindrisch ausgebildet. Im Prinzip könnte sie auch als Durchgangsleitung ausgebildet sein. In die durch den Schaltkopf 42 gebildete Kammer 23 könnte überdies vorzugsweise an der oberen Wandung eine Entlüftungsbohrung vorgesehen sein, mittels der die Kammer mit der Aussenluft zusätzlich verbunden wäre.

## Patentansprüche

1. Vorrichtung zur Erzeugung von Milchschaum für Cappuccino-Kaffee oder ähnlichen Getränken, mit einem die Milch oder dergleichen aufnehmenden Behälter (34), von welchem aus die Milch mittels einer Pumpe (55) über eine Leitung (37) in eine mit einer Austrittsöffnung (25) versehene Kammer (23) geleitet ist, wobei die Milch erhitzt und ihr Luft für die Erzeugung des Milchschaumes beigemischt ist, dadurch gekennzeichnet, dass
die Milch vor dem Eintritt in die Pumpe (55) oder vor dem Eintritt in ein Widerstandsdurchlasselement (20) zum einen erhitzt und ihr zum andern die Luft über eine in die Leitung (37) führende Luftzufuhrleitung (54) beigemischt ist, und dass die Milch von der Pumpe (55) unter Druck unmittelbar oder durch das Widerstandsdurchlasselement (20) unter Bildung des Milchschaums in die Kammer (23) mit der Austrittsöffnung (25) geleitet ist.

2. Vorrichtung nach Anspruch 1, dadurch gekennzeichnet, dass das vorzugsweise aus Kunststoff bestehende Widerstandsdurchlasselement (20) sich aus einem Zylinder (26) und einem darin angeordneten stabförmigen Element (27) zusammensetzt, bei letzterem umfangsseitig ein zur Erzeugung von Rahm an sich bekannter Labyrinthdurchlass (27') gebildet ist.

3. Vorrichtung nach Anspruch 1 oder 2, dadurch gekennzeichnet, dass die Pumpe (55) über eine Leitung (37) mit einem heizbaren Behälter (34) verbunden und zudem ein in diese Leitung (37) führende, an einen Luftmengenregler (50) angeschlossene Luftzufuhrleitung (54) vorgesehen ist.

4. Vorrichtung nach einem der Ansprüche 1 bis 3, dadurch gekennzeichnet, dass die auslasseitige Öffnung (22) des Widerstandsdurchlasselementes (20) durch ein Ventil geschlossen ist, wobei das Ventil eine koaxial zum Widerstandsdurchlasselement (20) angeordnete und von dessen stabförmigem Element (27) gehaltene Druckfeder (47) und ein an deren vorderem Ende vorgesehenem kugelförmiges Schliesselement (46) umfasst.

5. Vorrichtung nach Anspruch 4, dadurch gekennzeichnet, dass für das steuerbare Auslassen von Schaum eine das Ventil vorzugsweise von Hand betätigbare Schalteinrichtung (40) vorgesehen ist.

6. Vorrichtung nach Anspruch 5, dadurch gekennzeichnet, dass die Schalteinrichtung (40) einen die Kammer (23) sowie die Austrittsöffnung (25) verkörpernder Schaltkopf (42), ein Verbindungselement (28), ein Gehäuseteil (43) sowie einen in diesem montierten Mikroschalter (44) umfasst, wobei mit letzterem die Pumpe ein- oder ausgeschaltet wird.

7. Vorrichtung nach Anspruch 6, dadurch gekennzeichnet, dass der Schaltkopf (42) über ein an ihm angebrachten Steckdorn (45) in das mittels eines Bajonettverschlusses (29) im Widerstandsdurchlasselement (20) gehaltenen Verbindungselement (28) gesteckt und darin verschiebbar positioniert ist und zudem eine Spitze (49) aufweist, welche in die Öffnung (22) ragt und dort in Kontakt mit dem Ventil steht.

8. Vorrichtung nach Anspruch 7, dadurch gekennzeichnet, dass der Schaltkopf (42) ferner ein sich parallel zum Steckdorn (45) erstreckender, koaxial zum Mikroschalter (44) angeordneter Kontaktstift (51) und überdies ein die Austrittsöffnung (25) bildendes abnehmbares Steckteil (42') hat.

9. Vorrichtung nach Anspruch 7 oder 8, dadurch gekennzeichnet, dass sich die Öffnung (22) durch das Verbindungselement (28) und durch diesen Steckdorn (45) erstreckt und annähernd tangential in die ringförmige Kammer (23) mündet.

10. Vorrichtung nach Anspruch 1 oder 5, dadurch gekennzeichnet, dass eine Leitung von der Pumpe (55) bis zur Kammer (23) oder bis zur Schalteinrichtung (40) führt.

## Claims

1. Device to prepare foamy milk for cappuccino-coffee or the like beverages, with a vessel (34) to receive milk or the like, from said vessel the milk is led by a pump (55) through a line (37) into a chamber (23) which having an outlet opening (25), whereby the milk is heated and mixed with air to prepare foamy milk, characterised in that
the milk is heated and mixed with air by an air supply line (54) leading into the line (37) before this milk is leading into the pump (55) or before it is leading into the resistance passage member (20), and that the milk is fed under pressure by means of the pump (55) directly or through the resistance passage member (20) into the chamber (23) and thereby producing the foam.

2. Device according to claim 1, wherein
the resistance passage member (20), which is preferable consisting of plastic, comprises a cylinder (26) and in it a rod formed element (27), which is shaped at the circumference by means of a known labyrinth passage (27').

3. Device according to claim 1 or 2, wherein
a line (37) connecting the heatable vessel (34) with said pump (55); and said line (37) moreover communicating with the air intake line (54), which leading to an air quantity controller (50).

4. Device according to anyone of the claims 1 to 3, wherein
the outlet (22) of said resistance passage member (20) is closed by a valve, which including a pressure spring (47) and at the front end of latter a ball-shaped closing element (46), whereby the pressure spring (47) is arranged coaxially to said member and supported by said rod formed element (27) therein.

5. Device according to claim 4, wherein
said valve can be activated by a preferably hand operated switch device (40) for leaving out of prepared foam.

6. Device according to claim 5, wherein
said switch device (40) comprising a switch head (42), in which the chamber (23) and the outlet opening (25) is integrated, a connection member (28), a housing part (43) and a therein mounted microswitch (44), whereby with this microswitch said pump is switched on or off.

7. Device according to claim 6, wherein
said switch head (42) has a socket pin (45), with which it is plugged in this connection member (28) by a bayonet fixing (29), whereby said connection member is held in the resistance passage member (20), therein this switch head is movable positioned and thereby having a tip (49), which extends inside the outlet (22) of said resistance passage member and there it is in contact with said valve.

8. Device according to claim 7, wherein
said switch head (42) having a contact stud (51), which is arranged coaxial to this microswitch (44) and thereby parallel to this socket pin (45), and said switch head (42) including moreover a removable socket part (42'), which having the outlet opening (25).

9. Device according to claim 7 or 8, wherein
said outlet (22) extending through the connection member (28) and the socket pin (45) and flowing approximative tangentially into the cylindrical chamber (23).

10. Device according to claim 1 or 5, wherein
a line leading from the pump (55) to the chamber (23) or to the switch head (40).

## Revendications

1. Dispositif pour produire de la mousse de lait pour du café cappucino ou des boissons similaires, comprenant un réservoir (34) recevant le lait ou similaire à partir duquel le lait est amené au moyen d'une pompe (55) par une conduite (37) dans une chambre (23) munie d'une ouverture de sortie (25), le lait étant chauffé et de l'air y étant ajouté en vue de la production de la mousse de lait, caractérisé par le fait que d'une part le lait est chauffé et que d'autre part l'air y est ajouté en passant par une conduite d'amenée d'air (54) menant dans la conduite (37), avant l'entrée de l'air dans la pompe (55) ou avant son entrée dans un élément de passage à résistance (20), et que le lait est conduit de la pompe (55) sous pression directement ou à travers l'élément de passage à résistance (20), avec formation de la mousse de lait, dans la chambre (23) munie de l'ouverture de sortie (25).

2. Dispositif suivant la revendication 1, caractérisé par le fait que l'élément de passage à résistance (20) constitué de préférence en matière plastique se compose d'un cylindre (26) et d'un élément (27) en forme de barreau, disposé dans ce dernier et formant sur la périphérie un passage à labyrinthe (27') connu en soi pour la production de mousse de lait.

3. Dispositif suivant la revendication 1 ou 2, caractérisé par le fait que la pompe (55) est reliée par une conduite (37) à un réservoir (34) susceptible d'être chauffé et qu'il est en outre prévu une conduite d'amenée d'air (54) menant dans cette conduite (37) et raccordée à un régulateur de débit d'air (50).

4. Dispositif suivant l'une des revendications 1 à 3, caractérisé par le fait que l'ouverture (22), côté sortie, de l'élément de passage à résistance (20) est obturée par une valve qui comprend un ressort de compression (47) disposé coaxialement à l'élément de passage de résistance (20) et maintenu par l'élément (27) en forme de barreau de cet élément, et un élément obturateur (46) sphérique prévu à l'extrémité antérieure de ce ressort.

5. Dispositif suivant la revendication 4, caractérisé par le fait qu'en vue de la distribution contrôlée de mousse, il est prévu un dispositif de commande (40) de préférence à main, actionnant la valve.

6. Dispositif suivant la revendication 5, caractérisé par le fait que le dispositif de commande comprend une tête de commande (42) définissant la chambre (23) ainsi que l'ouverture de sortie (25), un élément de liaison (28), une partie de carter (43) ainsi qu'un interrupteur miniature (44) qui est monté dans cette partie de carter et à l'aide duquel la pompe peut être branchée ou débranchée.

7. Dispositif suivant la revendication 6, caractérisé par le fait que la tête de commande (42) comporte une broche d'emboîtement (45) emboîtée dans l'élément de liaison (28) maintenu à l'aide d'un système à baïonnette (29) dans l'élément de passage à résistance (20), et positionnée avec mobilité en translation dans ce dernier, et présente en outre une pointe (49) qui pénètre dans l'ouverture (22) et se trouve ici en contact avec la valve.

8. Dispositif suivant la revendication 7, caractérisé par le fait que la tête de commande (42) comprend en outre un poussoir de contact (51) s'étendant parallèlement à la broche d'emboîtement (45) et disposé coaxialement à l'interrupteur miniature (44), ainsi qu'une partie d'emboîtement (42') amovible, formant l'ouverture de sortie (25).

9. Dispositif suivant la revendication 7 ou 8, caractérisé par le fait que l'ouverture (22) s'étend à travers l'élément de liaison (28) et à travers la broche d'emboîtement (42) et débouche à peu près tangentiellement dans la chambre (23) annulaire.

10. Dispositif suivant la revendication 1 ou 5, caractérisé par le fait qu'une conduite mêne de la pompe (55) jusqu'à la chambre (23) ou jusqu'au dispositif de commande (40.
